(19)

Europäisches Patentamt
European Patent Office
Office européen des brevets

(11)  **EP 4 769 008 A1**

(12)  **EUROPEAN PATENT APPLICATION**
published in accordance with Art. 153(4) EPC

(43) Date of publication:
**01.07.2026  Bulletin 2026/27**

(21) Application number: **24864556.6**

(22) Date of filing: **06.09.2024**

(51) International Patent Classification (IPC):
**G02B 27/01** (2006.01)

(52) Cooperative Patent Classification (CPC):
**G02B 27/01**

(86) International application number:
**PCT/CN2024/117572**

(87) International publication number:
**WO 2025/055836 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023  CN 202311176226**

(71) Applicant: **Beijing Unicorn Technology Co., Ltd.
Beijing 100081 (CN)**

(72) Inventors:
• LIAO, Yizhou
  **Beijing 100098 (CN)**
• XIAO, Bing
  **Beijing 100098 (CN)**

(74) Representative: **Grünecker Patent- und
Rechtsanwälte
PartG mbB
Leopoldstraße 4
80802 München (DE)**

(54)  **OPTICAL SYSTEM AND HEAD-MOUNTED DISPLAY DEVICE**

(57)  Embodiments of the present disclosure provide an optical system and a head-mounted display device. The optical system of the embodiments of the present disclosure may comprise a display element, a lens, a beam splitter, and a reflector arranged in sequence along the system optical axis, wherein light rays from the display element pass through the lens, the beam splitter, and the reflector in sequence, and then pass through the beam splitter again before entering an eye box of the optical system, wherein the field of view of the optical system is greater than or equal to 35° and less than or equal to 55°; the first ratio of the optical system is greater than or equal to 1 and less than or equal to 1.3; and the first ratio refers to the ratio of the square root of the product of the focal length of the lens and the focal length of the reflective surface of the reflector to the system focal length of the optical system.

Fig. 3

## Description

The present application claims the priority of an invention application filed on September 12, 2023, with an application number of 202311176226.2 and entitled "Optical System and Head-Mounted Display Device", the contents of which are incorporated herein by reference in its entirety.

## TECHNICAL FIELD

Embodiments of the present disclosure relate to the technical field of augmented reality, in particular to an optical system and a head-mounted display device.

## BACKGROUND

Augmented reality technology is a technology that integrates virtual scenes with real-world scenes. By simultaneously projecting virtual images and real-world scenes into the eyes of users, a visual experience that fuses the virtual and the real is provided to users. Wearing devices that implement augmented reality, such as head-mounted display devices and AR glasses, is a common way for users to engage in a fused experience.

With an increase in demand, it is expected that the overall structure of the head-mounted display device will be more compact. However, it is difficult to balance the volume, the field of view, and the eye box (i.e., the area where the human eye can move and within which the human eye can see the entire display image) of an optical system in the design.

## SUMMARY

In view of this, embodiments of the present disclosure provide an optical system and a head-mounted display device.

According to a first aspect of the embodiments of the present disclosure, an optical system is provided. The optical system includes: a display element, a lens, a beam splitter, and a reflector arranged in sequence along a system optical axis, wherein light rays from the display element pass through the lens, the beam splitter, and the reflector in sequence, then pass through the beam splitter again, and enter an eye box of the optical system; the field of view of the optical system is greater than or equal to 35°, and the optical system satisfies the following relationship:

$$\sqrt{f_R \times f_L}/f = s_1$$

where $f_L$ represents the focal length of the lens, $f_R$ represents the focal length of the reflective surface of the reflector, $f$ represents the system focal length of the optical system, and the first ratio $s_1$ is greater than or equal to 1 and less than or equal to 1.3.

According to a second aspect of the embodiments of the present disclosure, a head-mounted display device is provided. The head-mounted display device includes the above optical system.

## BRIEF DESCRIPTION OF THE DRAWINGS

To more clearly describe the technical solutions in the embodiments of the present disclosure or in the prior art, a brief introduction to the drawings for use in the description of the embodiments or the prior art will be given below. Apparently, the drawings in the following description merely represent some embodiments described in the embodiments of the present disclosure, and those skilled in the art may also derive other drawings based on these drawings.

Fig. 1 is a structural schematic diagram of an optical system provided by an embodiment of the present disclosure.
Fig. 2 is a structural schematic diagram of another optical system provided by an embodiment of the present disclosure.
Fig. 3 is an imaging light path diagram of an optical system of the type shown in Fig. 1.
Fig. 4 is a schematic diagram of a Modulation Transfer Function (MTF) curve of an optical system provided by an embodiment of the present disclosure.
Fig. 5 is a structural schematic diagram of a head-mounted display device according to an exemplary embodiment of the present disclosure.

Reference numerals in the drawings:

100: optical system
101: display element
102: lens
103: beam splitter
104: reflector
500: head-mounted display device

**DETAILED DESCRIPTION**

To enable those skilled in the art to better understand the technical solution in the embodiments of the present disclosure, the technical solutions in the embodiments of the present disclosure will be described below clearly and completely in conjunction with the accompanying drawings in the embodiments of the present disclosure. Obviously, the described embodiments are merely a part but not all of the embodiments of the present disclosure. Based on the embodiments in the present disclosure, all the other embodiments obtained by those skilled in the art shall fall within the protection scope of the present disclosure. It should be noted that, in the absence of conflict, the embodiments in the present disclosure and the features in the embodiments may be combined with each other.

Specific implementations of the embodiments of the present disclosure are further described below with reference to the accompanying drawings of the embodiments of the present disclosure.

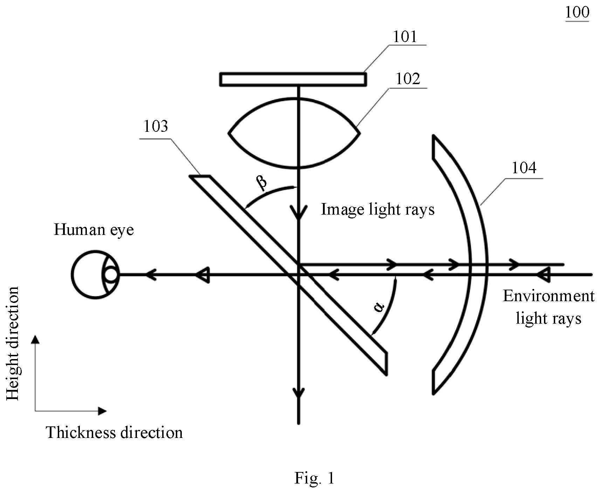

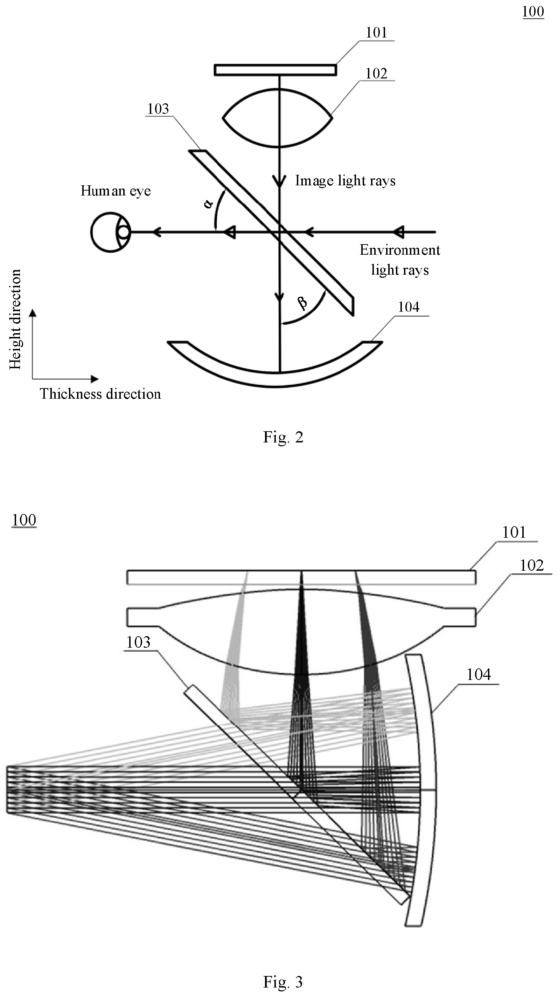

Fig. 1 is a structural schematic diagram of an optical system provided by some embodiments of the present disclosure, and Fig. 2 is another structural schematic diagram of an optical system provided by some embodiments of the present disclosure.

Referring to Figs. 1 and 2, the optical system 100 includes a display element 101, a lens 102, a beam splitter 103 and a reflector 104 arranged in sequence along a system optical axis. Light rays emitted by the display element 101 pass through the lens 102, the beam splitter 103 and the reflector 104 in sequence, then pass through the beam splitter 103 again, and enter an eye box of the optical system 100, such that the human eye located in the eye box can see the image displayed by the display element 101. It can be understood that the system optical axis refers to the optical axis of the optical system 100.

The display element 101 is configured to display the image to be projected into the human eye. The display element 101 can be, but is not limited to, a display with a small volume, so as to minimize the overall volume of the optical system 100 as much as possible. For example, the display element 101 can be an organic light-emitting diode (OLED) image source, a liquid crystal on silicon (LCOS) image source, a liquid crystal display (LCD) image source, a micro-electro-mechanical system (MEMS) image source, or a digital micromirror device (DMD) image source, etc. The image displayed by the display element 101 can be of various types, such as, but not limited to, 2D images, 3D images, static images, and dynamic images.

The lens 102 is configured to provide diopters for the optical system 100, and is capable of magnifying the image displayed by the display element 101. When the image displayed by the display element 101 is small, the image displayed by the display element 101 can be magnified.

The beam splitter 103 is configured to split incident light. The beam splitter 103 has a first surface and a second surface, and either the first surface or the second surface can serve as a beam splitting surface of the beam splitter 103. The beam splitting surface is partially transmissive and partially reflective.

The reflector 104 is configured to reflect the incident light rays, such that the light rays are redirected to enter an eye box. The reflector 104 can be partially transmissive and partially reflective, or it can be totally reflective.

It should be noted that for the entire optical system, the system optical axis can be a connecting line of the optical centers of respective optical elements in the optical system, and respective optical elements are arranged along the system optical axis. For a single optical element (for example, the optical axis of a reflector), the optical axis of the optical element passes through the optical center of the optical element, and no deviation occurs between the incident light rays and the emergent light rays. It can be understood that due to manufacturing and assembly errors, the system optical axis and the optical axis of a single optical element may not be a perfect straight line.

In some possible embodiments, referring to Fig. 1, the display element 101, the lens 102, and the reflector 104 are located on the same side of the beam splitter 103. The normal direction of the display element 101 coincides with or is parallel to the optical axis of the lens 102. The lens 102 has a first surface close to the beam splitter 103 and a second surface close to the display element 101. The beam splitter 103 has a second surface close to the lens 102 and a first surface away from the lens 102. The second surface of the beam splitter 103 is a beam splitting surface. The beam splitting surface of the beam splitter 103 forms a certain inclination angle with the optical axis of the lens 102. The optical axis of the reflector 104 forms a certain inclination angle with the beam splitting surface of the beam splitter 103. The reflector 104 may be a semi-transparent and semi-reflective lens.

As shown in Fig. 1, light rays emitted from the display element 101 enter the lens 102, and pass through the second surface and the first surface of the lens 102 before being incident on the second surface of beam splitter 103. Some of the light rays pass through the second surface and the first surface of the beam splitter 103 and are transmitted out, and the remaining light rays are reflected by the second surface (i.e., the beam splitting surface) of the beam splitter 103 to the reflective surface of the reflector 104. The light rays reflected by the reflective surface of the reflector 104 pass through the beam splitter 103 again and then enter the eye box. Ambient light rays from the real world can enter the eye box after passing through the reflector 104 and the beam splitter 103, such that the human eye located in the eye box can simultaneously see the clear magnified image displayed by the display element 101 and the real world.

In some possible embodiments, referring to Fig. 2, the display element 101, the lens 102, and the reflector 104 can be separately arranged on both sides of the beam splitter 103. In other words, the display element 101 and the lens 102 can be arranged on one side of the beam splitter 103, and the reflector 104 can be arranged on the other side of the beam splitter 103. The normal direction of the display element 101 coincides with or is parallel to the optical axis of the lens 102. The lens 102 has a second surface close to the display element 101 and a first surface close to the beam splitter 103. The beam splitter 103 has a second surface close to the lens 102 and a first surface close to the reflector 104. The second surface of the beam splitter 103 is a transmission surface, and the first surface of the beam splitter 103 is a beam splitting surface. The beam splitting surface of the beam splitter 103 forms a certain inclination angle with the optical axis of the lens 102. The optical axis of the reflector 104 forms a certain inclination angle with the beam splitting surface of the beam splitter 103.

As shown in Fig. 2, light rays emitted from the display element 101 enter the lens 102, and pass through the second surface and the first surface of the lens 102 before being incident on the beam splitter 103. After being transmitted through the second surface and the first surface of the beam splitter 103, the light rays are incident on the reflective surface of the reflector 104, and then reflected by the reflective surface of the reflector 104 to the first surface of the beam splitter 103. Some of the light rays are reflected by the first surface (i.e., the beam splitting surface) of the beam splitter 103 and finally enter the eye box. Ambient light rays from the real world can pass through the beam splitter 103 and then enter the eye box, such that the human eye located in the eye box can simultaneously see a clear magnified image displayed by the display element 101 and the real world.

Fig. 3 is an imaging optical path diagram of an optical system 100 of the type shown in Fig. 1. The light rays emitted by the display element 101 enter the lens 102. After being refracted by the second surface and the first surface of the lens 102, the light rays are incident on the second surface of the beam splitter 103. Some of the light rays are reflected by the second surface of the beam splitter 103 (i.e., the beam splitting surface of the beam splitter 103) to the reflective surface of the reflector 104. The light rays reflected by the reflective surface of the reflector 104 pass through the beam splitter 103 and finally enter the eye box. In this way, the human eye located in the eye box can see a clear magnified image displayed by the display element 101.

The imaging principle of the optical system 100 of the type shown in Fig. 2 is similar to that of the optical system described in Fig. 1, and will not be repeated herein.

In some embodiments of the present disclosure, a first ratio of the optical system 100 is greater than or equal to 1 and less than or equal to 1.3. The first ratio refers to the ratio of the square root of the product of the focal length of the lens 102 and the focal length of the reflector 104 to the system focal length of the optical system 100. The optical system 100 has a field of view greater than or equal to 35° and less than or equal to 55°. In other words, the optical system 100 satisfies the relationship shown in the following formula (1). Therefore, the human eye can see a clear image with a field of view ranging greater than or equal to 35° and less than or equal to 55° within a set eye box.

$$\sqrt{f_R \times f_L}/f = s_1 \quad (1)$$

where $f_L$ represents the focal length of the lens 102, $f_R$ represents the focal length of the reflective surface of the reflector 104, and $f$ represents the system focal length of the optical system 100. The value range of the first ratio $s_1$ is [1, 1.3]. That is, the first ratio $s_1$ can be greater than or equal to 1 and less than or equal to 1.3.

In this way, the optical system 100 can have a compact system volume when its field of view is greater than or equal to 35° and less than or equal to 55°.

Optionally, the first ratio $s_1$ can also be set to be greater than or equal to 1.05 and less than or equal to 1.2. In this way, when the optical system 100 has a field of view greater than or equal to 35° and less than or equal to 55°, the volume of the system can be further reduced.

In some embodiments of the present disclosure, the height of the optical system 100 is less than or equal to 27 mm, and the thickness of the optical system 100 is less than or equal to 20 mm. Therefore, the optical system 100 in the embodiments of the present disclosure has a compact volume, and can satisfy the requirement of comfortable wearing of the head-mounted display device. Optionally, the height of the optical system 100 may also be less than or equal to 24 mm, and the thickness of the optical system 100 is less than or equal to 16 mm. The volume of the optical system 100 can be further reduced, so as to better satisfy the requirement of wearing comfort of the head-mounted display device.

In some embodiments of the present disclosure, the second ratio of the optical system 100 is greater than or equal to 0.75 and less than or equal to 0.985. The second ratio refers to the ratio of the sum of the spacing between the reflector 104 and the beam splitter 103 along the system optical axis and the spacing between the lens 102 and the beam splitter 103 along the system optical axis to the system focal length of the optical system 100. In other words, the optical system 100 may satisfy the relationship shown in the following formula (2):

$$(L_1 + L_2)/f = s_2 \qquad (2)$$

where $L_1$ represents the spacing between the reflector 104 and the beam splitter 103 along the system optical axis, $L_2$ represents the spacing between the lens 102 and the beam splitter 103 along the system optical axis, and the second ratio $s_2$ is greater than or equal to 0.75 and less than or equal to 0.985.

It can be understood that the spacing between the reflector 104 and the beam splitter 103 along the system optical axis may refer to the distance between the optical center of the reflector 104 and the optical center of the beam splitter 103 on the system optical axis. The spacing between the lens 102 and the beam splitter 103 in the optical axis direction refers to the distance between the optical center of the lens 102 and the optical center of the beam splitter 103 in the system optical axis direction.

Optionally, the second ratio $s_2$ may be greater than or equal to 0.825 and less than or equal to 0.925.

Since an optical system 100 with a large field of view usually corresponds to a small system focal length, a small system focal length requires a small spacing between the reflector 104 and the lens 102 in the optical system 100. For an optical system of the type shown in Fig. 1, if a large field of view is to be achieved, it means that the spatial distance between the reflector 104 and the lens 102 is small. When the spatial distance is too small, interference between optical elements is likely to occur (that is, when the distance is too small, the edge of the reflector 104 and the edge of the lens 102 interfere with each other). For the optical system shown in Fig. 2, if a large field of view is to be achieved, it means that the spatial distance between the reflector 104 and the lens 102 is small. Then, the spatial distance between the reflector 104 and the beam splitter 103 and the spatial distance between the beam splitter 103 and the lens 102 also need to be small. When the spatial distance between the reflector 104 and the beam splitter 103 and the spatial distance between the beam splitter 103 and the lens 102 are too small, interference of optical elements is also likely to occur. The spacing between the reflector 104 and the beam splitter 103 and the spacing between the lens 102 and the beam splitter 103 can be optimized through formula (2), such that the spatial distance between the reflector 104 and the lens 102 in the optical system 100 is more reasonable when the system focal length is f, thereby avoiding interference between optical elements.

In some embodiments of the present disclosure, the lens 102 may be an aspherical lens that satisfies the equation shown in the following formula (3). The aspherical lens can perform spherical aberration correction, and can improve the imaging quality of the optical system 100 in the set eye box.

$$r = \frac{ch^2}{1+\sqrt{1-(k+1)c^2h^2}} + \sum Aih^i \qquad (3)$$

where r represents the sag of an aspheric surface at a height h along the optical axis relative to the vertex of the aspheric surface, c represents the curvature of the aspheric surface, that is, c=1/R (R is the radius of curvature of the aspheric surface); k represents the conic coefficient; and Ai represents the coefficient of the i-th order of the aspheric surface.

In some embodiments of the present disclosure, the third ratio of the optical system 100 may be greater than or equal to 0.2 and less than 1. The third ratio refers to the ratio of the difference between the sag of the first surface of the lens 102 (i.e., the surface close to the beam splitter 103) at the maximum effective aperture and the sag of the second surface of the lens 102 (i.e., the surface close to the display element 101) at the maximum effective aperture, to the sum of the sag of the first surface of the lens 102 at the maximum effective aperture and the sag of the second surface of the lens 102 at the maximum effective aperture. In other words, the optical system 100 may satisfy the relationship shown in the following formula (4):

$$(SGL_1 - SGL_2)/(SGL_1 + SGL_2) = s_3 \qquad (4)$$

where $SGL_1$ represents the sag of the surface of the lens 102 close to the beam splitter 103 at the maximum effective aperture, $SGL_2$ represents the sag of the surface of the lens 102 close to the display element 101 at the maximum effective aperture, and the third ratio $s_3$ is greater than or equal to 0.2 and less than 1.

Optionally, the third ratio $s_3$ of the optical system 100 may be greater than or equal to 0.4 and less than or equal to 0.8.

It should be noted that the lens 102 generally includes an effective aperture portion and an edge portion for installation and fixation, wherein the effective aperture portion participates in imaging.

By means of Formula (4), both the central field of view and the peripheral field of view of the optical system 100 can be taken into account, the optical resolution and field curvature of the central field of view and the peripheral field of view of the optical system 100 can be better balanced, and the difficulty in processing and manufacturing lenses can be effectively reduced at the same time.

In some embodiments of the present disclosure, the fourth ratio of the optical system 100 may be greater than or equal to 5 and less than or equal to 7. The fourth ratio refers to the ratio of the product of the central thickness of the lens 102 and the focal length of the lens 102 to the system focal length of the optical system 100. In other words, the optical system 100 may also satisfy the relationship shown in the following formula (5):

$$T \times f_L/f = s_4 \qquad (5)$$

where T represents the central thickness of the lens 102, and the fourth ratio $s_4$ is greater than or equal to 5 and less than or equal to 7.

Optionally, the fourth ratio may be greater than or equal to 5.5 and less than or equal to 6.5.

By means of Formula (5), the difficulty in processing and manufacturing the lens 102 can be effectively reduced, and the volume of the lens 102 can be adjusted, thereby reducing the weight and size of the entire system.

In addition, by reasonably optimizing the central thickness of the lens 102 and the focal length of the lens 102, the size of the lens 102 can be made more reasonable when the system focal length of the optical system 100 is f, thereby being beneficial to improving the imaging quality of the optical system 100 within the set eye box and the specified field of view, and better balancing the volume, the field of view and the eye box range of the optical system 100.

In some embodiments of the present disclosure, the fifth ratio of the optical system 100 may be greater than or equal to 0.02 and less than or equal to 0.2. The fifth ratio refers to the ratio of the spacing between the second surface of the lens 102 (i.e., the surface close to the display element 101) and the display surface of the display element 101 to the system focal length of the optical system 100. In other words, the optical system 100 may also satisfy the relationship shown in the following formula (6):

$$BFL/f = s_5 \qquad (6)$$

where *BFL* represents the spacing between the second surface of the lens 102 and the display surface of the display element 101 along the system optical axis, and the fifth ratio $s_5$ is greater than or equal to 0.02 and less than or equal to 0.2.

It should be noted that in the embodiments of the present disclosure, the spacing BFL between the surface of the lens 102 close to the display element 101 and the display element 101 is calculated as an equivalent distance in air.

By reasonably designing the system focal length of the optical system 100 and the spacing from the second surface of the lens to the display element 101 through Formula (6), the Chief Ray Angle (CRA) of the optical system 100 can be better matched with the CRA of the display element.

In some embodiments of the present disclosure, the refractive index of the lens 102 may be greater than or equal to 1.4 and less than or equal to 1.7. Optionally, the refractive index of the lens 102 may be greater than or equal to 1.4 and less than or equal to 1.6.

In some embodiments of the present disclosure, the Abbe number of the lens 102 may be greater than or equal to 18 and less than or equal to 65. Optionally, the Abbe number of the lens 102 may be greater than or equal to 30 and less than or equal to 60.

By selecting the lens 102 with reasonable refractive index and Abbe number, it is beneficial to improve the imaging quality of the optical system 100 within the set eye box and the specified field of view, and balance the volume, field of view and eye box range of the optical system 100 at the same time.

Referring to Figs. 1 and 2, the beam splitter 103 can be arranged obliquely relative to the lens 102. In some possible embodiments, the included angle between the normal of the display element 101 and the beam splitting surface of the beam splitter 103 is β, and the included angle between the beam splitting surface of the beam splitter 103 and the optical axis of the reflector 104 is α. The oblique arrangement of the beam splitter 103 relative to the lens 102 can be as follows: β is greater than or equal to 40° and less than or equal to 50°, and α is greater than or equal to β-10° and less than or equal to β+10°, thereby ensuring that the optical system 100 can achieve the designed field of view and eye box, and ensuring the imaging quality of the optical system 100.

In some embodiments of the present disclosure, the sixth ratio of the optical system 100 may be greater than or equal to 0.2 and less than or equal to 0.385. The sixth ratio refers to the ratio of the spacing between the reflector 104 and the beam splitter 103 along the system optical axis to the focal length of the reflector 104. In other words, the optical system 100 satisfies the relationship shown in the following formula (7):

$$L_1/f_R = s_6 \qquad (7)$$

where $L_1$ represents the spacing between the reflector 104 and the beam splitter 103 along the system optical axis, and the sixth ratio $s_6$ is greater than or equal to 0.2 and less than or equal to 0.385. The spacing between the reflector 104 and the beam splitter 103 can be controlled by Formula (7), and the spacing between the reflector 104 and the beam splitter 103 is more reasonable, which is beneficial to improving the imaging quality of the optical system 100 within the set eye box and the specified field of view, and is also beneficial to adjusting the size of the eye box.

Optionally, the sixth ratio $s_6$ may be greater than or equal to 0.3 and less than or equal to 0.35.

In some embodiments of the present disclosure, the size of the eye box at the preset eye relief (ER) satisfies the following requirements: the length of the eye box is greater than or equal to 8 mm and less than or equal to 25 mm, and the height of the eye box is greater than or equal to 3 mm and less than or equal to 10 mm, that is, the eye box can be set to a size that satisfies the relationship shown in the following formula (8).

$$8mm*3mm < EB < 25mm*10mm \qquad (8)$$

where EB represents the eye box, mm represents millimeters, * represents multiplication, the length refers to the dimension along the direction of the left and right eyes, and the height refers to the dimension perpendicular to the direction of the left and right eyes.

In some embodiments of the present disclosure, the diameter of the eye box at a preset eye relief may be greater than or equal to 6 mm.

In some embodiments of the present disclosure, the field of view of the optical system 100 may also reach a value greater than or equal to 40° and less than or equal to 55°. Therefore, the optical system 100 of the embodiments of the present disclosure can perform high-quality imaging on the image displayed by the display element 101 within a relatively large field of view range, such that the human eye located in the set eye box can see a clear image displayed by the display element 101.

Table 1 shows a reference table of optical parameters of each optical element in the optical system 100 according to some embodiments of the present disclosure. Table 2 shows an example of aspheric coefficients of the lens 102 in the optical system 100 shown in Table 1. The field of view of the optical system 100 is 43°, the system focal length f is 16.75 mm, the first ratio is 1.16, the second ratio is 0.896, the third ratio is 0.44, the fourth ratio is 5.97, the fifth ratio is 0.09, and the sixth ratio is 0.36.

Table 1

| No. of surfaces | Type of surfaces | Radius of curvature | Thicknes s | Refractive index | Abbe number | Focal length |
|---|---|---|---|---|---|---|
| 1 | Virtual image | Infinite | -5000 | | | |
| 2 | | Infinite | 0.00 | | | |
| 3 | | Infinite | 20.00 | | | |
| 4 | | Infinite | 7.50 | | | |
| 5 | Aspherical reflective surface | -41.38 | -7.50 | 1.52 | 58.5 | 20.69 |
| 6 | Reflective flat surface | Infinite | 7.50 | | | |
| 7 | Lens 102 | 15.28 | 5.50 | 1.54 | 56 | 18.18 |
| 8 | | -24.83 | 0.30 | | | |
| 9 | | Infinite | 0.21 | | | |
| 10 | Protective glass | Infinite | 0.70 | 1.52 | 58.5 | |
| 11 | Image plane | Infinite | | | | |

Table 2

| Parameters | S5 | S7 | S8 |
|---|---|---|---|
| K | 1.29 | -22.50 | 2.97 |
| A | 2.21E-06 | 5.34E-04 | 2.63E-04 |

(continued)

| Parameters | S5 | S7 | S8 |
|---|---|---|---|
| B | 3.45E-09 | -7.34E-06 | -4.87E-06 |
| C | -4.34E-12 | 8.18E-08 | 6.70E-08 |
| D | 5.93E-14 | -4.63E-10 | -5.06E-10 |
| E | -1.15E-17 | 8.88E-13 | 1.58E-12 |

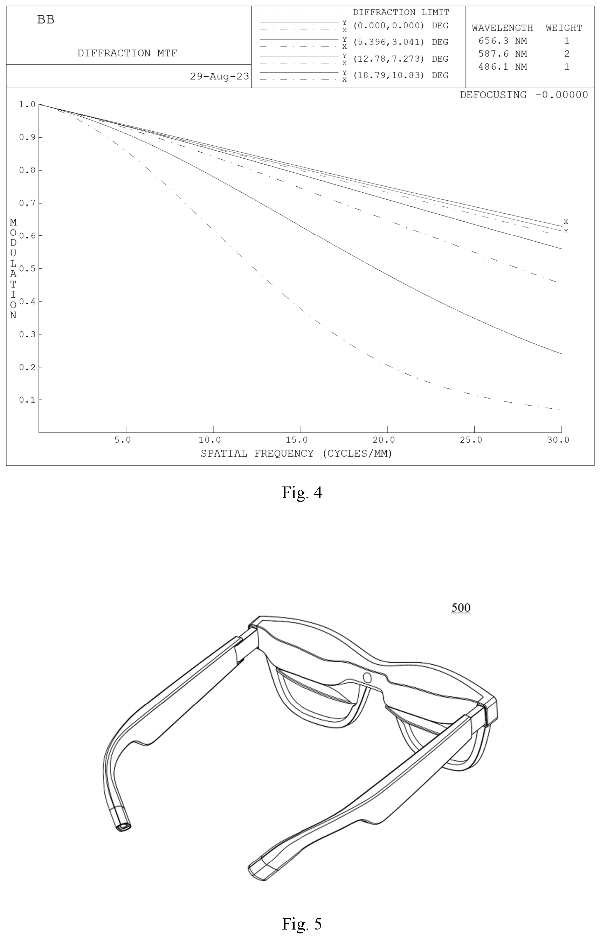

Fig. 4 shows a schematic diagram of a Modulation Transfer Function (MTF) curve of the optical system 100. MTF is a method to describe the performance of an optical system and can evaluate the ability of the optical system to reproduce contrast. In Fig. 4, the horizontal axis represents the spatial frequency, the vertical axis represents the contrast, the solid line represents the meridional direction, and the dashed line represents the sagittal direction. As shown in Fig. 4, the optical system 100 exhibits favorable optical resolution in different field of view directions, and its overall imaging quality is high, satisfying the requirements for resolving clarity of human eyes.

Referring to Fig. 5, a structural schematic diagram of a head-mounted display device 500 according to an embodiment of the present disclosure is shown. As shown in Fig. 5, the head-mounted display device 500 of this embodiment includes a frame and the above optical system 100.

The frame is configured to fix the optical system 100. The frame can be, for example but not limited to, a headband or an eyeglass frame.

In some optional embodiments, the head-mounted display device 500 includes, but is not limited to, VR smart glasses, AR smart glasses, XR smart glasses, MR smart glasses, etc.

In some optional embodiments, the head-mounted display device 500 includes an integrated head-mounted display device or a split-type head-mounted display device. The split-type head-mounted display device may include a head-mounted display apparatus and a terminal device. The head-mounted display apparatus is, for example, AR glasses, VR glasses, MR glasses, etc. The terminal device is, for example, a mobile phone, a tablet, a computer, etc.

It should be noted that, based on implementation requirements, individual components/steps described in the embodiments of the present disclosure may be subdivided into more components/steps, and two or more components/-steps, or portions of operations of components/steps may also be combined to form new components/steps to achieve the objectives of the embodiments of the present disclosure.

Those skilled in the art may appreciate that units and method steps in examples described in conjunction with the embodiments disclosed herein may be implemented in electronic hardware or a combination of computer software and electronic hardware. Whether these functions are performed in hardware or software depends on the specific application and design constraints of the technical solution. A professional skilled person may use different methods to implement the described functions for each specific application, but such implementations should not be considered beyond the scope of the embodiments of the present disclosure.

The above implementations are merely for illustrating the embodiments of the present disclosure, and are not intended to limit the embodiments of the present disclosure. Persons of ordinary skill in the relevant art may also make various changes and modifications without departing from the spirit and scope of the embodiments of the present disclosure. Therefore, all equivalent technical solutions also fall within the scope of the embodiments of the present disclosure. The scope of patent protection of the embodiments of the present disclosure shall be defined by the claims.

## Claims

1.  An optical system, comprising a display element, a lens, a beam splitter, and a reflector arranged in sequence along a system optical axis, wherein light rays from the display element pass through the lens, the beam splitter, and the reflector in sequence, then pass through the beam splitter again, and enter an eye box of the optical system;

    a field of view of the optical system is greater than or equal to 35° and less than or equal to 55°;
    the optical system satisfies a following relationship:

$$\sqrt{f_R \times f_L}/f = s_1$$

where $f_L$ represents a focal length of the lens, $f_R$ represents a focal length of the reflective surface of the reflector, $f$ represents a system focal length of the optical system, and a first ratio $s_1$ is greater than or equal to 1 and less than or equal to 1.3.

2. The optical system according to claim 1, wherein the first ratio $s_1$ is greater than or equal to 1.05 and less than or equal to 1.2.

3. The optical system according to claim 1 or 2, wherein the optical system satisfies any one of the following dimensions:

a height of the optical system is less than or equal to 27 mm, and a thickness is less than or equal to 20 mm;
a height of the optical system is less than or equal to 24 mm, and a thickness is less than or equal to 16 mm.

4. The optical system according to any one of the preceding claims, wherein the optical system further satisfies a following relationship:

$$(L_1 + L_2)/f = s_2$$

where $L_1$ represents spacing between the reflector and the beam splitter along the system optical axis, $L_2$ represents spacing between the lens and the beam splitter along the system optical axis, and a second ratio $s_2$ is greater than or equal to 0.75 and less than or equal to 0.985.

5. The optical system according to claim 4, wherein the second ratio $s_2$ is greater than or equal to 0.825 and less than or equal to 0.925.

6. The optical system according to any one of the preceding claims, wherein the lens satisfies the following relationship:

$$(SGL_1 - SGL_2)/(SGL_1 + SGL_2) = s_3$$

where $SGL_1$ represents a sag of the surface of the lens close to the beam splitter at a maximum effective aperture, $SGL_2$ represents a sag of the surface of the lens close to the display element at the maximum effective aperture, and a third ratio $s_3$ is greater than or equal to 0.2 and less than 1.

7. The optical system according to claim 6, wherein the third ratio $s_3$ is greater than or equal to 0.4 and less than or equal to 0.8.

8. The optical system according to any one of the preceding claims, wherein the lens satisfies the following relationship:

$$T \times f_L/f = s_4$$

where T represents a central thickness of the lens, and a fourth ratio $s_4$ is greater than or equal to 5 and less than or equal to 7.

9. The optical system according to claim 8, wherein the fourth ratio $s_4$ is greater than or equal to 5.5 and less than or equal to 6.5.

10. The optical system according to any one of the preceding claims, wherein the lens satisfies the following relationship:

$$BFL/f = s_5$$

where $BFL$ represents spacing between the surface of the lens close to the display element and a display surface of the display element along the system optical axis; the $BFL$ is calculated as an equivalent distance in air, and a fifth ratio $s_5$ is greater than or equal to 0.02 and less than or equal to 0.2.

11. The optical system according to any one of the preceding claims, wherein the reflector satisfies the following relationship:

$$L_1/f_R = s_6$$

where $L_1$ represents spacing between the reflector and the beam splitter along the system optical axis, and a sixth ratio $s_6$ is greater than or equal to 0.2 and less than or equal to 0.385.

12. The optical system according to claim 11, wherein the sixth ratio $s_6$ is greater than or equal to 0.3 and less than or equal to 0.35.

13. The optical system according to any one of the preceding claims, wherein the field of view of the optical system is greater than or equal to 40° and less than or equal to 55°.

14. The optical system according to any one of the preceding claims, wherein the eye box satisfies any one of the following dimensions at a preset eye relief:

a length of the eye box is greater than or equal to 8 mm and less than or equal to 25 mm, and the height of the eye box is greater than or equal to 3 mm and less than or equal to 10 mm;
a diameter of the eye box is greater than 6 mm.

15. A head-mounted display device, comprising:

a frame, configured to fix an optical system;
wherein the optical system is the optical system according to any one of claims 1 to 14.

Fig. 1

Fig. 2

Fig. 3

Fig. 4

500

Fig. 5

**INTERNATIONAL SEARCH REPORT**

| International application No. |
| --- |
| **PCT/CN2024/117572** |

**A. CLASSIFICATION OF SUBJECT MATTER**

G02B27/01(2006.01)i

According to International Patent Classification (IPC) or to both national classification and IPC

**B. FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS; CNTXT; VEN; ENTXT; ENTXTC; CNKI: 头戴, 头显, 近眼, 鸟浴, 反射, 反光, 焦距, 光焦度, 曲面, 曲率, 视野, 视场, 画幅, 视角, 分光, 分束, head+, mount+, display, near+, eye, reflect+, mirror+, focal, focus, field, angle, curv+, concave, light, split+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117192777 A (NREAL (BEIJING) TECHNOLOGY CO., LTD.) 08 December 2023 (2023-12-08)<br>claims 1-19 | 1-15 |
| PX | CN 221378385 U (NREAL (BEIJING) TECHNOLOGY CO., LTD.) 19 July 2024 (2024-07-19)<br>claims 1-19 | 1-15 |
| PX | CN 116974082 A (JIANGXI PHOENIX OPTICAL TECHNOLOGY CO., LTD.) 31 October 2023 (2023-10-31)<br>description, paragraphs [0044]-[0118], and figures 1-14 | 1-4, 6, 8, 10, 11, 13-15 |
| X | CN 115453764 A (SHENZHEN HUYNEW TECHNOLOGY CO., LTD.) 09 December 2022 (2022-12-09)<br>description, paragraphs [0004]-[0049], and figures 1-10 | 1-4, 6, 8-15 |
| A | CN 113325567 A (SHENZHEN NED OPTICS CO., LTD.) 31 August 2021 (2021-08-31)<br>entire document | 1-15 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 October 2024** | **09 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/117572** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 111624767 A (BOE TECHNOLOGY GROUP CO., LTD. et al.) 04 September 2020 (2020-09-04)<br>  entire document | 1-15 |

Form PCT/ISA/210 (second sheet) (July 2022)

**INTERNATIONAL SEARCH REPORT**
Information on patent family members

International application No.

**PCT/CN2024/117572**

| Patent document cited in search report | | | Publication date (day/month/year) | Patent family member(s) | Publication date (day/month/year) |
|---|---|---|---|---|---|
| CN | 117192777 | A | 08 December 2023 | None | |
| CN | 221378385 | U | 19 July 2024 | None | |
| CN | 116974082 | A | 31 October 2023 | None | |
| CN | 115453764 | A | 09 December 2022 | None | |
| CN | 113325567 | A | 31 August 2021 | None | |
| CN | 111624767 | A | 04 September 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202311176226 A